(19) Europäisches Patentamt / European Patent Office / Office européen des brevets

(11) **EP 3 874 965 A1**

(12) **EUROPEAN PATENT APPLICATION**
published in accordance with Art. 153(4) EPC


(43) Date of publication:
**08.09.2021 Bulletin 2021/36**

(21) Application number: **19878154.4**

(22) Date of filing: **04.09.2019**

(51) Int Cl.:
***A23K 20/147*** $^{(2016.01)}$ ***A23K 10/30*** $^{(2016.01)}$
***A23K 30/20*** $^{(2016.01)}$ ***A23K 10/14*** $^{(2016.01)}$

(86) International application number:
**PCT/KR2019/011427**

(87) International publication number:
**WO 2020/091216 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2018 KR 20180132557**



(71) Applicant: **CJ Cheiljedang Corporation**
**Seoul 04560 (KR)**

(72) Inventors:
- **SEO, Hyo Jeong**
  **Suwon-si, Gyeonggi-do 16509 (KR)**
- **LEE, Seung Eun**
  **Seoul 07298 (KR)**
- **HAN, Sung Wook**
  **Suwon-si, Gyeonggi-do 16509 (KR)**
- **HONG, Young Ho**
  **Suwon-si, Gyeonggi-do 16684 (KR)**

(74) Representative: **Potter Clarkson**
**The Belgrave Centre**
**Talbot Street**
**Nottingham NG1 5GG (GB)**


(54) **METHOD FOR MANUFACTURING HYDROLYSATE OF SOY PROTEIN CONCENTRATES**


(57) Provided are a method of preparing a hydrolysate of soy protein concentrate, a hydrolysate of soy protein concentrate prepared by the above method, and a feed composition including the hydrolysate.


FIG. 1

M
1
2
3
4
5
6
7
8
250kDa
150kDa
100kDa
75kDa
50kDa
37kDa
25kDa
20kDa
15kDa
10kDa





Printed by Jouve, 75001 PARIS (FR)

## Description

TECHNICAL FIELD

The present disclosure relates to a method of preparing a hydrolysate of soy protein concentrate.

BACKGROUND ART

Soy protein concentrate (SPC) is a processed soybean product in which protein is concentrated as compared with soybeans through the removal of non-protein such as oils and carbohydrates from soybeans. Due to its high protein content, SPC is widely used as a substitute for fish meal, etc. SPC has none of the saponins which are contained in soybeans and cause inflammatory reactions in fish such as salmon, etc. to adversely affect growth thereof. Thus, SPC is one of the most useful feeds as a vegetable protein source.

However, soy protein concentrate is composed of proteins having many different molecular weights, including high-molecular-weight proteins, because it includes the natural subunits constituting soy protein. In particular, high-molecular-weight proteins present in vegetable proteins are known to have low digestibility, as compared with low-molecular-weight proteins. Therefore, the hydrolysis of soy protein concentrate may be a good means of further enhancing its usefulness as a protein source, e.g., a feed.

Meanwhile, processed soy protein products which are currently produced, such as soy protein concentrate, soy protein isolates, soy protein hydrolysates, etc., are produced by chemical or enzymatic treatment. US Patent Publication No. 2011-0136745 discloses the hydrolysis of soybeans using pepsin, pancreatin, etc., which are proteases, after heat treatment. US Patent No. 4376128 discloses a method of treating bromelin- or papain-containing enzymes to improve the yield of edible proteins in legumes. As described, many different studies have been conducted to enhance the availability of soy protein, but there have been no satisfactory results.

In view of this situation, the present inventors have made intensive efforts to develop a hydrolysate of soy protein concentrate which is highly useful as a protein source, and as a result, they found that when the water content of soy protein concentrate is adjusted during enzymatic treatment, the degree of protein degradation of the soy protein concentrate may be improved, and at the same time, the content of soluble protein may also be improved, thereby completing the present disclosure.

DESCRIPTION OF EMBODIMENTS

TECHNICAL PROBLEM

An object of the present disclosure is to provide a method of preparing a hydrolysate of soy protein concentrate, the method including incubating an aqueous mixture including soy protein concentrate, protein hydrolase, and water, wherein a water content of the aqueous mixture is 5% (w/w) to 60% (w/w).

Another object of the present disclosure is to provide a hydrolysate of soy protein concentrate which is prepared by the method of the present disclosure.

Still another object of the present disclosure is to provide a feed composition including the hydrolysate of soy protein concentrate of the present disclosure.

Other objects and advantages of the present disclosure will become more fully apparent from the following detailed description of the embodiments, along with the appended claims and the accompanying drawings. Since contents that are not described in the present disclosure may be sufficiently recognized and inferred by those skilled in the art or similar art, a description thereof will be omitted.

SOLUTION TO PROBLEM

Each description and embodiment disclosed herein may also be applied to another description and embodiment. In other words, all combinations of various elements disclosed herein fall within the scope of the present disclosure. Further, the scope of the present disclosure is not to be limited by the specific description described below.

An aspect of the present disclosure provides a method of preparing a hydrolysate of soy protein concentrate, the method including incubating an aqueous mixture including soy protein concentrate, protein hydrolase, and water, wherein a water content of the aqueous mixture is 5% (w/w) to 60% (w/w).

In one embodiment, in the method of the present disclosure, the water content of the aqueous mixture may be 8% (w/w) to 60% (w/w), 5% (w/w) to 55% (w/w), or 8% (w/w) to 55% (w/w), based on the total weight.

As used herein, the term "soy protein concentrate" is a processed soybean product, in which proteins are concentrated, as compared with soybeans, by removing non-proteins such as oils and carbohydrates from soybeans.

Soybeans has a protein content of 30% (w/w) to 40% (w/w), based on the total weight of the soybeans, whereas the soy protein concentrate may have a protein content of 50% (w/w) or more, 55% (w/w) or more, 50% (w/w) to 80% (w/w), 55% (w/w) to 80% (w/w), 50% (w/w) to 70% (w/w), 55% (w/w) to 70% (w/w), 50% (w/w) to 65% (w/w), or 55% (w/w) to 65% (w/w), based on the total weight of the soy protein concentrate.

As used herein, the term "aqueous mixture" refers to a mixture including soy protein concentrate, protein hydrolase, and water, and the water content of the aqueous mixture may be adjusted, for example, by changing the amount of water added during preparation of the aqueous mixture or through an additional drying process.

As used herein, the term "hydrolysate" refers to a product that undergoes a protein hydrolysis reaction by contacting the aqueous mixture with the protein hydrolase.

A common process of producing soy protein includes a processing processes such as concentrating, heating, etc. These processes induce protein denaturation such as protein aggregation, increase of hydrophobicity, etc., which may influence quality characteristics such as contents of low-molecular-weight proteins and water solubility of proteins, thereby serving as a factor inhibiting protein digestibility. Therefore, unfolding of insoluble protein produced by these processes or increasing of proportions of soluble protein and low-molecular-weight protein may enhance the function of digestive enzymes and absorption into the intestine during digestion. In other words, low molecularization of soy protein and increasing of the content of soluble protein are closely related with quality as a protein source.

In one embodiment, the water content of the aqueous mixture in the method of the present disclosure may be reduced from more than 25% (w/w) and 60% (w/w) or less to 5% (w/w) or more and less than 25% (w/w), and specifically, from more than 25% (w/w) and 55% (w/w) or less, more than 25% (w/w) and 50% (w/w) or less, more than 25% (w/w) and 45% (w/w) or less, more than 25% (w/w) and 40% (w/w) or less, 30% (w/w) to 60% (w/w), 30% (w/w) to 55% (w/w), 30% (w/w) to 50% (w/w), 30% (w/w) to 45% (w/w), or 30% (w/w) to 40% (w/w), to 8% (w/w) or more and less than 25% (w/w), 8% (w/w) to 20% (w/w), or 5% (w/w) to 20% (w/w) in the incubating of the present disclosure.

In one embodiment, reduction of the water content in the method of the present disclosure may be performed by drying. In the method of the present disclosure, the drying may be performed by a common drying method known in the art, specifically, by heating, and more specifically, by applying hot air. Much more specifically, a temperature of the heating or the hot air may be 50 °C to 100 °C, 50 °C to 90 °C, 50 °C to 80 °C, 50 °C to 75 °C, 50 °C to 70 °C, 50 °C to 60 °C, 60 °C to 100 °C, 60 °C to 90 °C, 60 °C to 80 °C, 60 °C to 75 °C, 60 °C to 70 °C, 65 °C to 100 °C, 65 °C to 90 °C, 65 °C to 80 °C, 65 °C to 75 °C, 65 °C to 70 °C, 70 °C to 100 °C, 70 °C to 90 °C, 70 °C to 80 °C, or 70 °C to 75 °C. The temperature of the heating or the hot air may be any temperature, as long as it does not deactivate the protein hydrolase in the method of the present disclosure while making a central temperature (i.e., a product temperature) of the aqueous mixture in the method of the present disclosure equal to the incubation temperature in the method of the present disclosure. More specifically, when the water content is reduced, the central temperature of the aqueous mixture may be 50 °C to 100 °C, 50 °C to 90 °C, 50 °C to 80 °C, 50 °C to 70 °C, 50 °C to 65 °C, 55 °C to 100 °C, 55 °C to 90 °C, 55 °C to 80 °C, 55 °C to 70 °C, or 55 °C to 65 °C.

In one embodiment, the drying in the method of the present disclosure may be performed for the same period of time as the incubation time of the present disclosure, or may be performed after the beginning of the incubation of the present disclosure. Specifically, the drying of the present disclosure may be performed for 0.5 hour to 12 hours, 0.5 hour to 9 hours, 0.5 hour to 8 hours, 0.5 hour to 7 hours, 0.5 hour to 6 hours, 0.5 hour to 5 hours, 0.5 hour to 4 hours, 0.5 hour to 3 hours, 0.5 hour to 2 hours, 0.5 hour to 1 hour, 1 hour to 12 hours, 1 hour to 9 hours, 1 hour to 8 hours, 1 hour to 7 hours, 1 hour to 6 hours, 1 hour to 5 hours, 1 hour to 4 hours, 1 hour to 3 hours, 1 hour to 2 hours, 2 hours to 12 hours, 2 hours to 9 hours, 2 hours to 8 hours, 2 hours to 7 hours, 2 hours to 6 hours, 2 hours to 5 hours, 2 hours to 4 hours, 2 hours to 3 hours, 3 hours to 12 hours, 3 hours to 9 hours, 3 hours to 8 hours, 3 hours to 7 hours, 3 hours to 6 hours, 3 hours to 5 hours, 3 hours to 4 hours, 4 hours to 12 hours, 4 hours to 9 hours, 4 hours to 8 hours, 4 hours to 7 hours, 4 hours to 6 hours, 4 hours to 5 hours, 5 hours to 12 hours, 5 hours to 9 hours, 5 hours to 8 hours, 5 hours to 7 hours, 5 hours to 6 hours, 6 hours to 12 hours, 6 hours to 9 hours, 6 hours to 8 hours, 6 hours to 7 hours, 7 hours to 12 hours, 7 hours to 9 hours, 7 hours to 8 hours, or 8 hours to 9 hours.

When the drying of the present disclosure is performed after the beginning of the incubation of the present disclosure, the drying may be performed at 1 hour, 2 hours, 3 hours, 4 hours, 5 hours, 6 hours, 7 hours, 8 hours, 9 hours, 10 hours, 11 hours, or 12 hours after the beginning of the incubation. Further, the drying may be performed in two or more steps in the incubating of the present disclosure. Specifically, when the drying is performed in two or more steps, a second drying may be performed at 1 hour, 2 hours, 3 hours, 4 hours, 5 hours, 6 hours, 7 hours, 8 hours, 9 hours, 10 hours, 11 hours, or 12 hours after terminating a first drying.

As used herein, the term "protein hydrolase" refers to an enzyme having degradation activity on proteins under water-added conditions. The protein hydrolase of the present disclosure may include pepsin, peptidase, and trypsin, but is not limited thereto. In one embodiment, the protein hydrolase in the method of the present disclosure may be a chemical enzyme or a biological enzyme including those derived from microorganisms, and specifically, one or more protein hydrolases selected from the group consisting of protein hydrolases derived from *Bacillus licheniformis, Bacillus subtilis,* and *Bacillus amyloliquefaciens.* In the method of the present disclosure, the protein hydrolase may be used by selecting the kind and concentration of an appropriate enzyme and a reaction time according to a composition and a content of proteins in the hydrolysate of soy protein concentrate. More specifically, the protein hydrolase in the method of the present disclosure may be a protein hydrolase derived from *Bacillus licheniformis.*

In one embodiment, a concentration of the protein hydrolase in the method of the present disclosure may be 0.01% (w/w) to 0.50% (w/w), 0.01% (w/w) to 0.35% (w/w), 0.01% (w/w) to 0.25% (w/w), 0.01% (w/w) to 0.20% (w/w), 0.05% (w/w) to 0.50% (w/w), 0.05% (w/w) to 0.35% (w/w), 0.05% (w/w) to 0.30% (w/w), 0.05% (w/w) to 0.25% (w/w), 0.05% (w/w) to 0.20% (w/w), 0.10% (w/w) to 0.50% (w/w), 0.10% (w/w) to 0.35% (w/w), 0.10% (w/w) to 0.30% (w/w), 0.10% (w/w) to 0.25% (w/w), 0.10% (w/w) to 0.20% (w/w), 0.15% (w/w) to 0.50% (w/w), 0.15% (w/w) to 0.35% (w/w), 0.15% (w/w) to 0.25% (w/w), 0.15% (w/w) to 0.20% (w/w), 0.20% (w/w) to 0.50% (w/w), 0.20% (w/w) to 0.35% (w/w), 0.20% (w/w) to 0.30% (w/w), or 0.20% (w/w) to 0.25% (w/w), based on the weight of the soy protein concentrate.

In one embodiment, the incubating in the method of the present disclosure may be performed under temperature conditions of 50 °C to 100 °C, 50 °C to 90 °C, 50 °C to 80 °C, 50 °C to 70 °C, 50 °C to 65 °C, 55 °C to 100 °C, 55 °C to 90 °C, 55 °C to 80 °C, 55 °C to 70 °C, or 55 °C to 65 °C. Further, the incubating in the method of the present disclosure may be performed for 0.5 hour to 12 hours, 0.5 hour to 9 hours, 0.5 hour to 8 hours, 0.5 hour to 7 hours, 0.5 hour to 6 hours, 0.5 hour to 5 hour hours, 0.5 hour to 4 hours, 0.5 hour to 3 hours, 0.5 hour to 2 hours, 0.5 hour to 1 hour, 1 hour to 12 hours, 1 hour to 9 hours, 1 hour to 8 hours, 1 hour to 7 hours, 1 hour to 6 hours, 1 hour to 5 hours, 1 hour to 4 hours, 1 hour to 3 hours, 1 hour to 2 hours, 2 hours to 12 hours, 2 hours to 9 hours, 2 hours to 8 hours, 2 hours to 7 hours, 2 hours to 6 hours, 2 hours to 5 hours, 2 hours to 4 hours, 2 hours to 3 hours, 3 hours to 12 hours, 3 hours to 9 hours, 3 hours to 8 hours, 3 hours to 7 hours, 3 hours to 6 hours, 3 hours to 5 hours, 3 hours to 4 hours, 4 hours to 12 hours, 4 hours to 9 hours, 4 hours to 8 hours, 4 hours to 7 hours, 4 hours to 6 hours, 4 hours to 5 hours, 5 hours to 12 hours, 5 hours to 9 hours, 5 hours to 8 hours, 5 hours to 7 hours, 5 hours to 6 hours, 6 hours to 12 hours, 6 hours to 9 hours, 6 hours to 8 hours, 6 hours to 7 hours, 7 hours to 9 hours, 7 hours to 8 hours, or 8 hours to 9 hours.

In the method of the present disclosure, when the initial water content of the aqueous mixture is increased, and the drying process is performed together with the hydrolysis reaction to reduce the water content of the aqueous mixture, or when hydrolysis of the aqueous mixture having the high water content is performed, the water content is reduced, and the hydrolysis is further performed, the content of water-soluble proteins in the hydrolysate was significantly increased in both of the cases. These effects were more excellent than those obtained by performing hydrolysis of the aqueous mixture having the low initial water content, together with the drying process, or by performing hydrolysis of the aqueous mixture having the high initial water content without the drying process. Therefore, the hydrolysis process of the soy protein concentrate involving the aqueous mixture having the high initial water content and the drying process thereof may improve the quality of the hydrolysate. Further, this drying process may decrease a concentration of the enzyme to be used, and may also allow to omit a separate drying process for the preparation of a final product, thereby enhancing efficiency of the entire production process.

Another aspect of the present disclosure may provide a hydrolysate of soy protein concentrate prepared by the method of the present disclosure.

In the hydrolysate of soy protein concentrate prepared by the method of the present disclosure, a proportion of proteins having a molecular weight of 30 kDa or less may be 30% to 90%, specifically 30% to 80%, 30% to 70%, 30% to 60%, 30% to 50%, 30% to 40%, 40% to 90%, 40% to 80%, 40% to 70%, 40% to 60%, 40% to 50%, 50% to 90%, 50% to 80%, 50% to 70%, 50% to 60%, 60% to 90%, 60% to 80%, 60% to 70%, 70% to 90%, 70% to 80%, or 80% to 90%, based on the total protein in the hydrolysate. In the proportion of the proteins of the present disclosure, % of the present disclosure represents a percentage of a partial area that represents a particular molecular weight range in a protein molecular weight distribution by GPC.

Further, the hydrolysate of soy protein concentrate prepared by the method of the present disclosure may have a nitrogen solubility index (NSI) of 5% (w/w) to 40% (w/w), and specifically, 5% (w/w) to 35% (w/w), 5% (w/w) to 30% (w/w), 5% (w/w) to 20% (w/w), 5% (w/w) to 15% (w/w), 5% (w/w) to 10% (w/w), 10% (w/w) to 40% (w/w), 10% (w/w) to 35% (w/w), 10% (w/w) to 30% (w/w), 10% (w/w) to 20% (w/w), 10% (w/w) to 15% (w/w), 15% (w/w) to 40% (w/w), 15% (w/w) to 35% (w/w), 15% (w/w) to 30% (w/w), or 15% (w/w) to 20% (w/w). As used herein, the term "NSI" is an index for determining the denaturation degree of soy protein, together with KOH solubility and protein dispersibility index (PDI), and NSI may be used to evaluate the content of water-soluble proteins in the hydrolysate. That is, a high NSI represents a high content of water-soluble proteins or a low degree of protein denaturation. Therefore, the hydrolysate of soy protein concentrate having a high NSI may indicate that it is improved in terms of usefulness as a protein source.

Still another aspect of the present disclosure provides a feed composition including the hydrolysate of soy protein concentrate prepared by the method of the present disclosure.

A content of the hydrolysate of soy protein concentrate in the feed composition of the present disclosure may be appropriately controlled depending on the kind and age of livestock to be applied, an application form, desired effects, etc., and for example, the content may be 1% (w/w) to 99% (w/w), 10% (w/w) to 90% (w/w), or 20% (w/w) to 80% (w/w).

For administration, the feed composition of the present disclosure may further include a mixture of one or more of an organic acid such as citric acid, fumaric acid, adipic acid, lactic acid, etc.; phosphate such as potassium phosphate, sodium phosphate, polyphosphate, etc.; a natural antioxidant such as polyphenol, catechin, tocopherol, vitamin C, green tea extract, chitosan, tannic acid, etc.; in addition to the hydrolysate of soy protein concentrate. If necessary, other common additives such as an anti-influenza agent, a buffer, a bacteriostatic agent, etc. may be added. In addition, a diluent, a dispersing agent, a surfactant, a binder, or a lubricant may be additionally added to formulate the feed composition of the present disclosure into an injectable preparation such as an aqueous solution, a suspension, an emulsion, etc., a capsule, a granule, or a tablet. Moreover, the feed composition of the present disclosure may be used together with various auxiliary components such as amino acids, inorganic salts, vitamins, antioxidants, antifungal agents, antimicrobial agents, etc., and a nutrient supplement, a growth accelerator, a digestion-absorption accelerator, and a prophylactic agent, in addition to the main ingredients including a vegetable protein feed such as pulverized or fragmented wheat, barley, corn, etc., an animal protein feed such as blood meal, meat meal, fish meal, etc., animal fat, and vegetable fat.

When the feed composition of the present disclosure is used as a feed additive, the feed composition may be added as it is or used together with other components, and may be appropriately used according to a common method. The feed composition may be prepared in the administration form of an immediate-release formulation or a sustained-release formulation, in combination with non-toxic pharmaceutically acceptable carriers. The edible carriers may be corn starch, lactose, sucrose, or propylene glycol. The solid carrier may be in the administration form of tablets, powders, troches, etc., and the liquid carrier may be in the administration form of syrups, liquid suspensions, emulsions, solutions, etc. In addition, the administration agent may include a preservative, a lubricant, a solution accelerator, or a stabilizer, and may also include other agents for improving inflammatory diseases and a substance useful for the prevention against viruses.

The feed composition of the present disclosure may be applied to an animal's diet, i.e., a feed for many animals including mammals, poultry, fish, and crustaceans. It may be used in commercially important mammals such as pigs, cattle, goats, etc., zoo animals such as elephants, camels, etc., or livestock such as dogs, cats, etc. Commercially important poultry may include chickens, ducks, geese, etc., and the fish and crustaceans may include commercially grown fish and crustaceans such as trout and shrimp.

The feed composition of the present disclosure may be mixed in an amount of about 10 g to 500 g, for example, 10 g to 100 g per 1 kg, based on the dry weight of the livestock feed. After being completely mixed, the feed composition may be provided as mash or further subjected to a pelletizing, extensification, or extrusion process.

## ADVANTAGEOUS EFFECTS OF DISCLOSURE

The method of the present disclosure may increase the degree of protein degradation and the content of water-soluble proteins in the hydrolysate according to treatment of protein hydrolase by adjusting the water content of the aqueous mixture during hydrolysis of the soy protein concentrate. Accordingly, the present disclosure may provide the hydrolysate of soy protein concentrate which is very useful as a protein source.

## BRIEF DESCRIPTION OF DRAWINGS

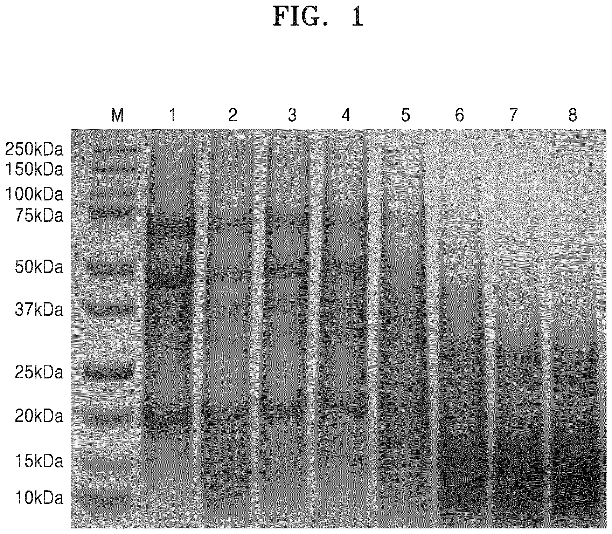

The above and other aspects, features, and advantages of certain embodiments of the disclosure will be more apparent from the following description taken in conjunction with the accompanying drawings, in which: FIG. 1 shows SDS-PAGE results of examining changes in the degree of protein degradation by a hydrolysis reaction according to water content of an aqueous mixture including soy protein concentrate, wherein M: biomarker, 1: soy protein concentrate raw material, 2: hydrolysate with water of 40% (w/w), 3: hydrolysate with water of 35% (w/w), 4: hydrolysate with water of 30% (w/w), 5: hydrolysate with water of 25% (w/w), 6: hydrolysate with water of 20% (w/w), 7: hydrolysate with water of 15% (w/w), and 8: hydrolysate with water of 10% (w/w);

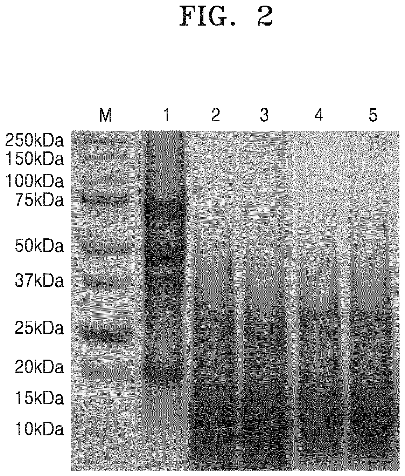

FIG. 2 shows SDS-PAGE results of examining changes in the degree of protein degradation by hydrolysis reaction under low water content conditions, wherein M: biomarker, 1: soy protein concentrate raw material, 2: water of 10% (w/w) and 1-hr reaction, 3: water of 10% (w/w) and 2-hr reaction, 4: water of 15% (w/w) and 1-hr reaction, and 5: water of 15% (w/w) and 2-hr reaction;

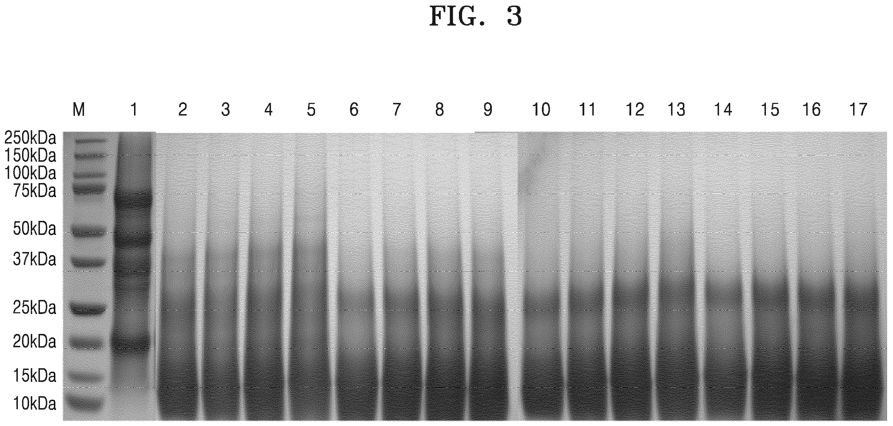

FIG. 3 shows SDS-PAGE results of examining changes in the degree of protein degradation by hydrolysis reaction according to the concentration of protein hydrolase, wherein M: biomarker, 1: soy protein concentrate raw material, 2: enzyme of 0.05% (w/w) and 1-hr hydrolysate, 3: enzyme of 0.05% (w/w) and 2-hr hydrolysate, 4: enzyme of 0.05% (w/w) and 3-hr hydrolysate, 5: enzyme of 0.05% (w/w) and 4-hr hydrolysate, 6: enzyme of 0.1% (w/w) and 1-hr hydrolysate, 7: enzyme of 0.1% (w/w) and 2-hr hydrolysate, 8: enzyme of 0.1% (w/w) and 3-hr hydrolysate, 9: enzyme of 0.1% (w/w) and 4-hr hydrolysate, 10: enzyme of 0.2% (w/w) and 1-hr hydrolysate, 11: enzyme of 0.2% (w/w) and 2-hr hydrolysate, 12: enzyme of 0.2% (w/w) and 3-hr hydrolysate, 13: enzyme of 0.2% (w/w) and 4-hr hydrolysate, 14: enzyme of 0.35% (w/w) and 1-hr hydrolysate, 15: enzyme of 0.35% (w/w) and 2-hr hydrolysate, 16: enzyme of 0.35% (w/w) and 3-hr hydrolysate, and 17: enzyme of 0.35% (w/w) and 4-hr hydrolysate;

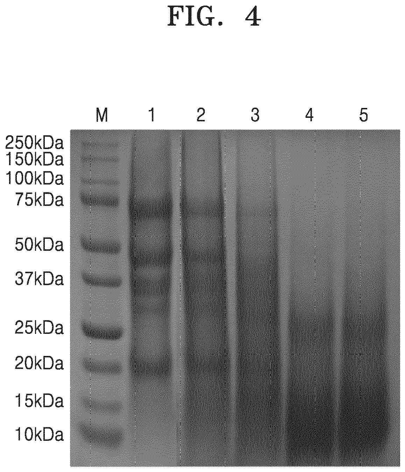

FIG. 4 shows SDS-PAGE results of examining changes in the degree of protein degradation by simultaneous processes of hydrolysis and drying of an aqueous mixture having a water content of 40% (w/w), wherein M: biomarker; 1: soy protein concentrate raw material; 2: initial water of 40% (w/w), 1-hr reaction and drying, water of 31.2% (w/w)); 3: initial water of 40% (w/w), 2-hr reaction and drying, water of 22.1% (w/w); 4: initial water of 40% (w/w), 3-hr reaction and drying, water of 11.53% (w/w); and 5: initial water of 40% (w/w), 4-hr reaction and drying, water of 7% (w/w);

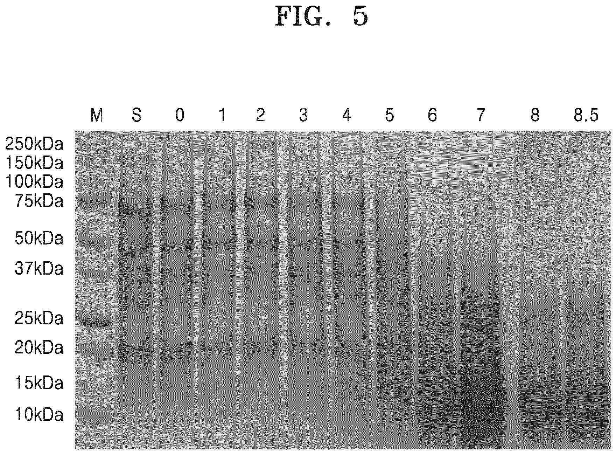

FIG. 5 shows SDS-PAGE results of examining changes in the degree of protein degradation by simultaneous processes of hydrolysis and drying of an aqueous mixture having a water content of 40% (w/w), wherein M: biomarker, S: soy protein concentrate raw material, 0: 0-hr enzymatic reaction, 1: 1-hr enzymatic reaction, 2: 2-hr enzymatic reaction, 3: 3-hr enzymatic reaction, 4: 4-hr enzymatic reaction, 5: 5-hr enzymatic reaction, 6: 6-hr enzymatic reaction, 7: 7-hr enzymatic reaction, 8: 8-hr enzymatic reaction, and 8.5: 8.5-hr enzymatic reaction;

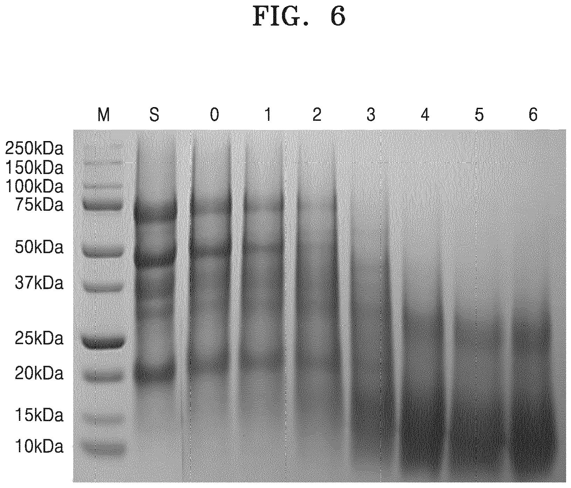

FIG. 6 shows SDS-PAGE results of examining changes in the degree of protein degradation by simultaneous processes of hydrolysis and drying of an aqueous mixture having a water content of 30 % (w/w), wherein M: biomarker, S: soy protein concentrate raw material, 0: 0-hr enzymatic reaction, 1: 1-hr enzymatic reaction, 2: 2-hr enzymatic reaction, 3: 3-hr enzymatic reaction, 4: 4-hr enzymatic reaction, 5: 5-hr enzymatic reaction, and 6: 6-hr enzymatic reaction;

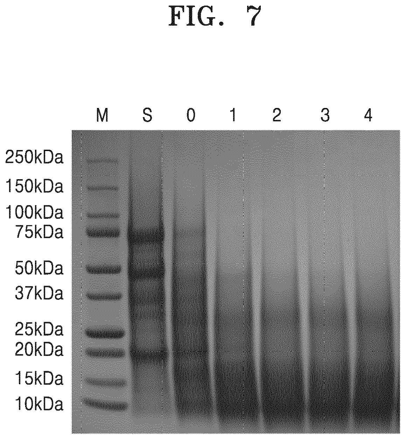

FIG. 7 shows SDS-PAGE results of examining changes in the degree of protein degradation by simultaneous processes of hydrolysis and drying of an aqueous mixture having a water content of 20 % (w/w), wherein M: biomarker, S: soy protein concentrate raw material, 0: 0-hr enzymatic reaction, 1: 1-hr enzymatic reaction, 2: 2-hr enzymatic reaction, 3: 3-hr enzymatic reaction, and 4: 4-hr enzymatic reaction;

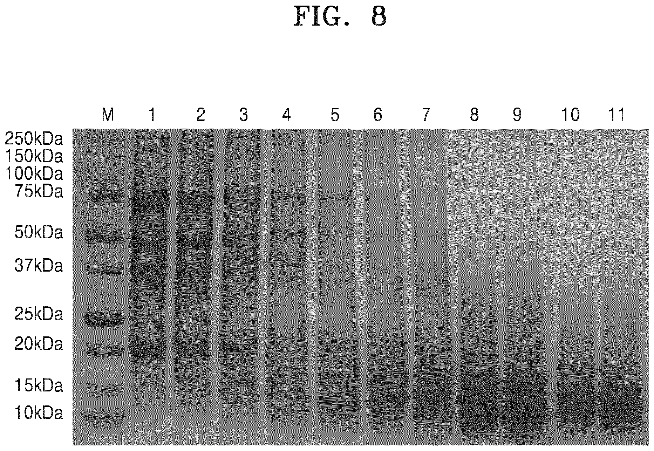

FIG. 8 shows SDS-PAGE results of examining changes in the degree of protein degradation with or without a drying process of an aqueous mixture having a water content of 40 % (w/w), wherein M: biomarker, 1: soy protein concentrate raw material, 2: sample after mixing with the enzyme, 3: 0-hr enzymatic reaction, 4: 1-hr enzymatic reaction, 5: 2-hr enzymatic reaction, 6: 3-hr enzymatic reaction, 7: 4-hr enzymatic reaction, 8: drying after 1-hr enzymatic reaction, 9: drying after 2-hr enzymatic reaction, 10: drying after 3-hr enzymatic reaction, and 11: drying after 4-hr enzymatic reaction;

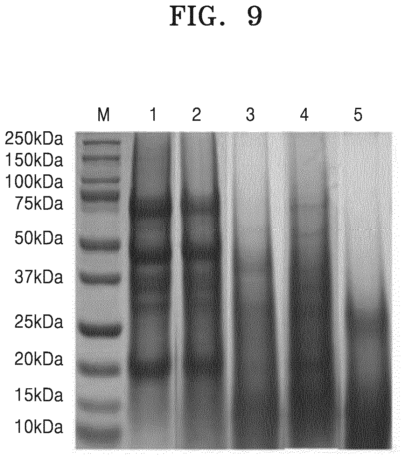

FIG. 9 shows SDS-PAGE results of examining changes in the degree of degradation of a hydrolysate of soy protein concentrate according to water content and enzyme, wherein M: biomarker, 1: soy protein concentrate raw material, 2: *Bacillus amyloliquefaciens-derived* protease; water of 25% (w/w), 3: *Bacillus amyloliquefaciens-derived* protease; water of 15% (w/w), 4: *Bacillus licheniformis*-derived protease; water of 25% (w/w), and 5: *Bacilus licheniformis-derived* protease; water of 15% (w/w); and

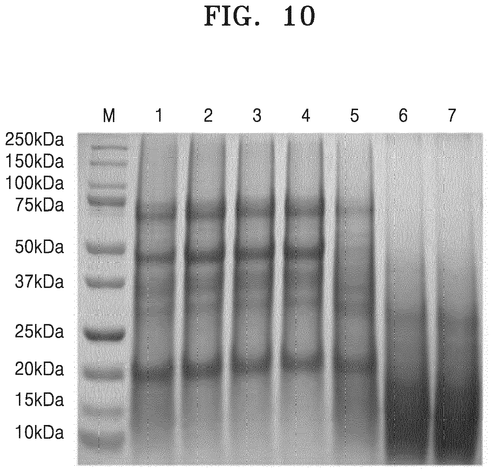

FIG. 10 shows SDS-PAGE results of examining changes in the degree of protein degradation of the hydrolysate of soy protein concentrate according to water content by using the *Bacillus subtilis-derived* protease, wherein M: biomarker, 1: water of 40% (w/w), 2: water of 35% (w/w), 3: water of 30% (w/w), 4: water of 25% (w/w), 5: water of 20% (w/w), 6: water of 15% (w/w), and 7: water of 10% (w/w).

MODE OF DISCLOSURE

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

**Example 1. Comparison of degree of protein degradation and content of water-soluble proteins in hydrolysate of soy protein concentrate according to changes in water content**

An aqueous mixture was prepared by diluting, in water, *Bacillus licheniformis-derived* protein hydrolase (Prozyme AK, Vision Biochem) of 0.35% (w/w), based on the weight of soy protein concentrate, adding this dilution to a reaction vessel containing the soy protein concentrate (100 g, X-soy 600, CJ Selecta, a protein content of 60% (w/w) or more based on the total weight), and further adding water thereto to adjust a water content at 10% (w/w), 15% (w/w), 20% (w/w), 25% (w/w), 30% (w/w), 35% (w/w), or 40% (w/w), based on the total weight. Thereafter, a hydrolysis reaction was allowed by incubating the aqueous mixture at 60 °C for 4 hours. The hydrolysis reaction was terminated by heating each experimental group at 100 °C for 20 minutes. A hydrolysate of each experimental group in which the reaction was terminated was dried and then pulverized. Samples for SDS-PAGE, gel permeation chromatography (GPC), and nitrogen solubility index (NSI) analysis were prepared by suspending 100 mg of the pulverized hydrolysate of soy protein concentrate in 5 ml of 8 M urea solvent, sonicating the suspension, and then centrifuging the suspension at 8000 rpm for 10 minutes. Thereafter, each sample was quantified using bicinchoninic acid, and a predetermined amount of the sample was loaded on an SDS-PAGE gel. Further, a molecular weight distribution of the proteins in the hydrolysate was confirmed by filtering the sample through a 0.45 μm syringe filter and then performing GPC analysis of the filtrate.

As a result, as the water content of the aqueous mixture was decreased from 40% to 10%, the degree of protein degradation was increased. Thus, as the water content was decreased, some high-molecular-weight protein bands disappeared and low-molecular-weight protein bands were increased on the SDS-PAGE gel (FIG. 1). Further, a proportion of the low-molecular-weight protein bands (<30kDa) was increased, as the water content of the aqueous mixture was decreased (Table 1).

[Table 1]

| MW (kDa) | Water of 40% (w/w) | Water of 35% (w/w) | Water of 30% (w/w) | Water of 25% (w/w) | Water of 20% (w/w) | Water of 15% (w/w) | Water of 10% (w/w) |
|---|---|---|---|---|---|---|---|
| >75 | 25.3 | 19.7 | 10.8 | 4.7 | 3.8 | 5.6 | 5.1 |
| 30~75 | 22.4 | 25.5 | 25.5 | 15.6 | 13.2 | 11.6 | 11.0 |
| 10~30 | 13.4 | 16.4 | 23.8 | 30.6 | 26.6 | 18.9 | 18.8 |
| 5~10 | 11.2 | 11.6 | 14.2 | 21.0 | 25.1 | 27.0 | 27.3 |
| <5 | 27.8 | 26.7 | 25.7 | 28.2 | 31.4 | 36.9 | 37.8 |
| Total | 100.0 | 100.0 | 100.0 | 100.0 | 100.0 | 100.0 | 100.0 |

Further, the content of the water-soluble proteins in the hydrolysate of soy protein concentrate was evaluated by measuring NSI. Water was added to a reaction vessel containing 1 g of the pulverized hydrolysate of soy protein concentrate to obtain a solution of a total 40 ml volume, this solution was centrifuged under conditions of 30 °C and 120 rpm for 2 hours, and the resulting supernatant was obtained, and then NSI was determined by Kjeldahl method according to the following Equation:

[Equation 1]

NSI(%, w/w) = extracted supernatant proteins / sample solid proteins x 100

As a result, NSI was decreased, as the water content of the aqueous mixture was decreased from 40% (w/w) to 25% (w/w), whereas NSI tended to rather increase, as the water content of the aqueous mixture was decreased from 25% (w/w) to 10% (w/w) (Table 2). In other words, when the hydrolysis reaction was allowed in the aqueous mixture having the water content of 30% (w/w) or more, or 20% (w/w) or less, high levels of NSI were observed. Further, the highest NSI was observed, when the water content was 40% (w/w).

[Table 2]

| Sample | NSI (% (w/w)) |
|---|---|
| Soy protein concentrate raw material | 5.36 |
| Hydrolysate with water of 40% (w/w) | 19.07 |
| Hydrolysate with water of 35% (w/w) | 12.41 |
| Hydrolysate with water of 30% (w/w) | 8.47 |
| Hydrolysate with water of 25% (w/w) | 5.96 |
| Hydrolysate with water of 20% (w/w) | 6.97 |
| Hydrolysate with water of 15% (w/w) | 11.70 |
| Hydrolysate with water of 10% (w/w) | 13.58 |

Additionally, after increasing the weight of the soy protein concentrate to 500 g, the water content of the aqueous mixture was increased up to 50% (w/w), and incubation was performed in the same manner as the above Example to examine whether the NSI was increased or not. It was also examined whether the degree of protein degradation in the aqueous mixture having the low water content was increased even when the weight of the soy protein concentrate was increased. Specifically, the aqueous mixture was prepared by adding Prozyme AK at a concentration of 0.2% (w/w), based on the weight of the soy protein concentrate, to a reaction vessel containing the soy protein concentrate (500 g), and adding water thereto to adjust the water content at 40% (w/w), 45% (w/w), or 50% (w/w), based on the total weight. Thereafter, a hydrolysis reaction under high water conditions was performed by incubating the aqueous mixture at 60 °C for 4 hours. The hydrolyzed product was collected every 1 hour, and deactivated by heating at 100 °C for 20 minutes. Further, the aqueous mixture was dried to adjust the water content to 10% (w/w) or 15% (w/w), and the hydrolysis reaction was performed under the same conditions as above, followed by deactivation. The deactivated product was dried and pulverized, and used as a sample for SDS-PAGE, GPC, and NSI analysis. The analysis was performed in the same manner as above. Meanwhile, a non-enzyme treatment group (only water added) as a control group under high water conditions was used for comparison of the effects according to the hydrolysis reaction.

As a result, when the weight of the soy protein concentrate was increased, high levels of NSI were also observed by performing the hydrolysis of the aqueous mixture having the high water content (Table 3), and the degree of protein degradation was increased by performing the hydrolysis of the aqueous mixture having the low water content (FIG. 2 and Table 4).

[Table 3]

| Time (hr) | NSI (% (w/w)) after enzyme treatment | | | NSI (% (w/w)) after non-enzyme treatment |
|---|---|---|---|---|
| | Water of 40% (w/w) | Water of 45% (w/w) | Water of 50% (w/w) | Water 40% (w/w) |
| 0 | 5.22 | 5.22 | 5.22 | 5.22 |
| 1 | 11.03 | 13.08 | 15.61 | 5.75 |
| 2 | 13.95 | 17.14 | 20.68 | 5.65 |
| 3 | 16.34 | 20.44 | 25.00 | 5.68 |
| 4 | 17.61 | 22.80 | 26.29 | 5.51 |

[Table 4]

| MW(kDa) | Water of 10% (w/w) | | Water of 15% (w/w) | |
|---|---|---|---|---|
| | 1hr | 2hr | 1hr | 2hr |
| >75 | 4.44 | 4.47 | 4.43 | 5.30 |
| 30~75 | 11.97 | 9.93 | 10.90 | 11.04 |
| 10~30 | 22.53 | 17.35 | 17.77 | 18.25 |
| 5~10 | 31.16 | 31.86 | 31.93 | 31.09 |
| <5 | 29.89 | 36.39 | 34.97 | 34.31 |
| Total | 100.00 | 100.00 | 100.00 | 100.00 |

**Example 2. Comparison of degree of protein degradation and content of water-soluble proteins in hydrolysate of soy protein concentrate according to changes in hydrolase concentration**

In this Example, the aqueous mixtures including soy protein concentrate were prepared to have the same water content of 15% (w/w), and the effects of hydrolysis were compared according to concentrations of protein hydrolase. The aqueous mixture was prepared by adding Prozyme AK at a concentration of 0.05% (w/w), 0.1% (w/w), 0.2% (w/w), or 0.35% (w/w), based on the weight of the soy protein concentrate, to a reaction vessel containing the soy protein concentrate (100 g), and adding water thereto to adjust the water content at 15% (w/w), based on the total weight. Thereafter, a hydrolysis reaction was performed by incubating the aqueous mixture at 60 °C for 4 hours. At this time, the hydrolyzed product was collected every 1 hour, and deactivated by heating at 100 °C for 20 minutes. The deactivated product was dried and pulverized, and used as a sample for SDS-PAGE, GPC, and NSI analysis. The analysis was performed in the same manner as in

Example 1.

As a result, protein bands of 37 kDa to 50 kDa were more clearly observed in a 0.05% enzyme-treated group than other concentration groups, and a proportion of the low-molecular-weight protein bands was increased, as the enzyme concentration was increased (FIG. 3). Further, a molecular weight distribution of the proteins included in the hydrolysate was analyzed, and as a result, the concentration of protein hydrolase did not greatly influence the proportion of the proteins of 75 kDa or more, whereas the proportion of the proteins of 10 kDa or less was increased as the concentration of protein hydrolase was increased (Table 5).

[Table 5]

| MW (kDa) | SP C | Enz 0.05% (w/w) | | | | Enz 0.1% (w/w) | | | | Enz 0.2% (w/w) | | | | Enz 0.35% (w/w) | | | |
|---|---|---|---|---|---|---|---|---|---|---|---|---|---|---|---|---|---|
| | | 1hr | 2hr | 3hr | 4hr | 1hr | 2hr | 3hr | 4hr | 1hr | 2hr | 3hr | 4hr | 1hr | 2hr | 3hr | 4hr |
| >75 | 10.6 | 2.5 | 2.2 | 2.2 | 2.6 | 2.4 | 2.5 | 2.3 | 2.9 | 2.6 | 2.7 | 2.2 | 2.6 | 2.4 | 2.4 | 2.2 | 2.2 |
| 30~75 | 53.0 | 14.9 | 16.1 | 15.0 | 14.9 | 14.8 | 14.2 | 13.7 | 12.4 | 13.4 | 12.8 | 11.9 | 12.3 | 11.2 | 10.8 | 10.6 | 8.9 |
| 10~30 | 20.9 | 26.4 | 31.5 | 27.7 | 26.2 | 27.3 | 25.0 | 23.0 | 20.5 | 23.3 | 20.7 | 18.3 | 18.0 | 18.0 | 16.3 | 15.1 | 14.0 |
| 5~10 | 5.6 | 27.9 | 25.9 | 27.7 | 27.8 | 27.8 | 28.7 | 29.3 | 30.1 | 29.2 | 29.8 | 30.3 | 30.1 | 30.2 | 30.0 | 29.6 | 29.3 |
| <5 | 9.8 | 28.4 | 24.3 | 27.4 | 28.5 | 27.7 | 29.6 | 31.7 | 34.1 | 31.6 | 34.1 | 37.3 | 36.9 | 38.2 | 40.5 | 42.5 | 45.6 |
| Total | 100 | 100 | 100 | 100 | 100 | 100 | 100 | 100 | 100 | 100 | 100 | 100 | 100 | 100 | 100 | 100 | 100 |

Further, NSI was increased as the concentration of protein hydrolase was increased. In particular, when the concentration of protein hydrolase was 0.2% (w/w) or more, NSI of 10% (w/w) or more was observed (Table 6) Further, a difference in NSI according to the reaction time of 1 hour to 4 hours at the same concentration was hardly observed, whereas the enzyme concentration greatly influenced NSI (Table 6).

[Table 6]

| Enzyme conc. (% (w/w)) | Reaction time (hr) | NSI (% (w/w)) |
|---|---|---|
| SPC | | 5.73 |
| 0.05% | 1 | 7.08 |
| | 2 | 6.77 |
| | 3 | 6.94 |
| | 4 | 6.68 |
| 0.10% | 1 | 9.30 |
| | 2 | 9.58 |
| | 3 | 8.18 |
| | 4 | 8.96 |
| 0.20% | 1 | 11.61 |
| | 2 | 11.94 |
| | 3 | 11.86 |
| | 4 | 10.02 |
| 0.35% | 1 | 15.43 |
| | 2 | 14.27 |
| | 3 | 14.74 |
| | 4 | 15.92 |

**Example 3. Comparison of degree of protein degradation and content of water-soluble proteins in hydrolysate of soy protein concentrate according to simultaneous processes of hydrolysis and drying**

The aqueous mixture was prepared by adding Prozyme AK at a concentration of 0.2%, based on the weight of the soy protein concentrate, to a reaction vessel containing the soy protein concentrate (100 g), and adding water thereto to adjust the water content at 40% (w/w), based on the total weight. Thereafter, a hydrolysis reaction was performed by incubating the aqueous mixture at 60 °C for 4 hours, and at the same time, drying was performed by applying hot air at 60 °C such that the central temperature of the aqueous mixture was the same as the incubation temperature of 60 °C. At this time, the hydrolyzed product was collected every 1 hour, a water content thereof was measured, and then the product was deactivated by heating at 100 °C for 20 minutes. The deactivated product was dried and pulverized, and used as a sample for SDS-PAGE, GPC, and NSI analysis. The analysis was performed in the same manner as in Example 1.

As a result, with regard to the effects of improving the protein degradation and the content of water-soluble proteins, even though the initial water content was adjusted to 40% (w/w), NSI was similar to that in the case where hydrolysis of the soy protein concentrate having the water content of 15% (w/w) was performed for 4 hours by adding 0.35% (w/w) of the enzyme, when the water content of the aqueous mixture reached a particular level of about 20% (w/w) during the reaction and drying process (FIG. 4, Table 7, and Table 8). In other words, dynamic changes of the water content of the aqueous mixture, i.e., adjustment of the water content of the aqueous mixture from the high water content to the low water content during the hydrolysis allowed to obtain excellent hydrolysis effects even using a small amount of enzyme.

[Table 7]

| MW(kDa) | SPC | 1hr | 2hr | 3hr | 4hr |
|---|---|---|---|---|---|
| >75 | 40.3 | 29.7 | 10.8 | 6.7 | 7.0 |
| 30~75 | 32.4 | 27.9 | 17.4 | 9.5 | 9.3 |
| 10~30 | 13.1 | 18.2 | 28.4 | 13.1 | 12.9 |
| 5~10 | 4.3 | 8.3 | 17.0 | 20.2 | 19.9 |
| <5 | 9.8 | 15.9 | 26.4 | 50.5 | 50.9 |
| Total | 100 | 100 | 100 | 100 | 100 |

[Table 8]

| Time (hr) | Water (% (w/w)) | NSI (% (w/w)) |
|---|---|---|
| 0 | 40 | 5.21 |
| 1 | 31.2 | 7.75 |
| 2 | 22.1 | 7.75 |
| 3 | 11.53 | 14.96 |
| 4 | 7 | 15.53 |

Additionally, the amount of the soy protein concentrate was increased, and the degree of protein degradation and the content of water-soluble proteins were compared according to the initial water content of the aqueous mixture. The aqueous mixture was prepared by adding Prozyme AK at a concentration of 0.2%, based on the weight of the soy protein concentrate, to a reaction vessel containing the soy protein concentrate (500 g), and adding water thereto to adjust the initial water content at 40% (w/w), 30% (w/w), or 20% (w/w), based on the total weight. Thereafter, a hydrolysis reaction was performed by incubating the aqueous mixture at 60 °C for 8 hours, and at the same time, drying was performed by applying hot air at 60 °C such that the central temperature of the aqueous mixture was the same as the incubation temperature of 60 °C. At this time, the hydrolyzed product was collected every 1 hour, a water content thereof was measured, and then the product was deactivated by heating at 100 °C for 20 minutes. The deactivated product was dried and pulverized, and used as a sample for SDS-PAGE, GPC, and NSI analysis. The analysis was performed in the same manner as in Example 1.

Molecular weight distributions of the proteins according to hydrolysis and drying processes of the aqueous mixtures having the initial water content of 40% (w/w), 30% (w/w), or 20% (w/w) are as shown in FIG. 5 and Table 9, FIG. 6 and Table 10, and FIG. 7 and Table 11, respectively. As a result, it was confirmed that when the hydrolysis reaction time was 4 hours or 8 hours or more, all showed a significant increase in the degree of protein degradation.

[Table 9]

| MW(kDa ) | Raw mater ial | 0hr | 1hr | 2hr | 3hr | 4hr | 5hr | 6hr | 7hr | 8hr | 8.5hr |
|---|---|---|---|---|---|---|---|---|---|---|---|
| >75 | 26.67 | 29.57 | 32.81 | 34.50 | 28.35 | 20.50 | 11.80 | 5.38 | 4.69 | 4.52 | 4.39 |
| 30~75 | 35.96 | 29.82 | 28.40 | 27.46 | 28.13 | 27.04 | 20.48 | 11.95 | 9.72 | 9.33 | 9.01 |
| 10~30 | 20.66 | 19.56 | 17.21 | 16.46 | 19.24 | 24.03 | 31.25 | 26.61 | 17.31 | 16.46 | 16.06 |
| 5~10 | 7.32 | 9.65 | 9.41 | 9.24 | 10.58 | 13.00 | 17.91 | 27.63 | 31.14 | 31.22 | 31.28 |
| <5 | 9.38 | 11.40 | 12.17 | 12.35 | 13.70 | 15.43 | 18.56 | 28.43 | 37.14 | 38.48 | 39.26 |
| Total | 100.0 0 | 100.0 | 100.0 | 100.0 | 100.0 | 100.0 | 100.0 | 100.0 | 100.0 | 100.0 | 100.0 |

[Table 10]

| MW(kDa) | Raw material | 0hr | 1hr | 2hr | 3hr | 4hr | 5hr | 6hr |
|---|---|---|---|---|---|---|---|---|
| >75 | 34.18 | 29.73 | 21.92 | 14.24 | 6.56 | 5.04 | 4.74 | 4.70 |
| 30~75 | 34.68 | 33.01 | 31.10 | 26.30 | 15.80 | 11.69 | 10.42 | 10.18 |
| 10~30 | 16.55 | 18.75 | 24.09 | 31.31 | 34.69 | 22.06 | 18.79 | 17.72 |
| 5~10 | 5.52 | 7.71 | 10.26 | 13.88 | 22.28 | 30.08 | 30.65 | 31.07 |
| <5 | 9.07 | 10.81 | 12.62 | 14.27 | 20.68 | 31.12 | 35.40 | 36.33 |
| Total | 100.00 | 100.0 | 100.0 | 100.0 | 100.0 | 100.0 | 100.0 | 100.0 |

[Table 11]

| MW(kDa) | Raw material | 0hr | 1hr | 2hr | 3hr | 4hr |
|---|---|---|---|---|---|---|
| >75 | 24.38 | 3.80 | 2.03 | 2.27 | 2.19 | 2.23 |
| 30~75 | 44.45 | 14.42 | 11.21 | 10.52 | 9.61 | 9.54 |
| 10~30 | 18.16 | 38.38 | 24.67 | 21.22 | 20.46 | 20.61 |
| 5~10 | 6.96 | 28.41 | 39.25 | 40.34 | 40.72 | 40.61 |
| <5 | 6.05 | 15.00 | 22.85 | 25.65 | 27.01 | 27.00 |
| Total | 100.00 | 100.0 | 100.0 | 100.0 | 100.0 | 100.0 |

In the present Example, based on the above experimental results, changes in the water content according to the reaction time, a proportion of the proteins <30 kDa, and changes of NSI were analyzed for the aqueous mixture including the soy protein concentrate having the initial water content of 40% (w/w), 30% (w/w), or 20% (w/w).

As a result, when the water content of the aqueous mixture was reduced to 20% (w/w) or less by the drying process, the degree of the protein degradation was greatly improved, and thus the proportion of the proteins <30 kDa occupied 80% or more of the entire proteins, and high NSI values were observed, as the initial water content of the soy protein concentrate was increased (Table 12).

[Table 12]

| Time (hr) | Change of water (% (w/w)) | | | <30kDa protein (%) | | | NSI (% (w/w)) | | |
|---|---|---|---|---|---|---|---|---|---|
| | 40% | 30% | 20% | 40% | 30% | 20% | 40% | 30% | 20% |
| 0 | 39.01 | 28.35 | 19.41 | 40.6 | 37.3 | 81.8 | 8.0 | 6.6 | 6.2 |
| 1 | 36.02 | 25.2 | 16.12 | 38.8 | 47.0 | 86.8 | 9.2 | 6.2 | 9.3 |
| 2 | 33.39 | 22.49 | 13.01 | 38.0 | 59.5 | 87.2 | 8.7 | 6.9 | 12.2 |
| 3 | 29.7 | 18.04 | 10.2 | 43.5 | 77.6 | 88.2 | 9.2 | 7.0 | 13.7 |
| 4 | 26.54 | 14.13 | 8.06 | 52.5 | 83.3 | 88.2 | 8.9 | 11.6 | 13.7 |
| 5 | 22.61 | 10.95 | | 67.7 | 84.8 | | 9.3 | 15.0 | |
| 6 | 18 | 7.82 | | 82.7 | 85.1 | | 10.4 | 15.1 | |
| 7 | 13.17 | | | 85.6 | | | 15.6 | | |
| 8 | 9.19 | | | 86.2 | | | 17.0 | | |
| 8.5 | 7.95 | | | 86.6 | | | 17.7 | | |
| (*"<30kDa protein (%)" is a total sum of proportions of the proteins less than 30 kDa in the following GPC results according to water content.) | | | | | | | | | |

In other words, the degree of protein degradation is improved when the water content of the aqueous mixture is low. However, NSI is more improved by gradually decreasing the water content through the drying process, after increasing the initial water content.

**Example 4. Comparison of degree of protein degradation and content of water-soluble proteins in hydrolysate of soy protein concentrate according to drying process after performing hydrolysis for predetermined time**

The aqueous mixture was prepared by adding water to a reaction vessel containing 25 kg of the soy protein concentrate to adjust the water content at 40% (w/w), based on the total weight, and then adding Prozyme AK thereto at a concentration of 0.2% (w/w), based on the weight of the concentrate. Thereafter, a hydrolysis reaction was performed by incubating the aqueous mixture at 60 °C for 4 hours. At this time, experimental groups were divided into two groups according to the presence of the drying process, and these groups were further divided into a total of eight experimental groups according to the hydrolysis reaction time (1 hr, 2 hr, 3 hr, or 4 hr), respectively. The drying process was performed, together with the hydrolysis reaction, by applying hot air at 70 °C for about 45 minutes to 60 minutes such that the central temperature of the aqueous mixture was the same as the incubation temperature of 60 °C. At this time, the hydrolyzed product was collected every 1 hour, and then the product was deactivated by heating at 100 °C for 20 minutes. The deactivated product was dried and pulverized, and used as a sample for SDS-PAGE, GPC, and NSI analysis. The analysis was performed in the same manner as in Example 1.

As a result, the degree of the protein degradation was remarkably increased, and the content of the water-soluble proteins was also significantly increased (FIG. 8, Table 13, and Table 14)

[Table 13]

| MW (kDa) | Raw material | Water content of 40% (w/w), Enzymatic reaction | | | | | Water content of 40% (w/w), Enzymatic reaction + Drying process | | | |
|---|---|---|---|---|---|---|---|---|---|---|
| | | 0hr | 1hr | 2hr | 3hr | 4hr | Drying after 1-hr reaction | Drying after 2-hr reaction | Drying after 3-hr reaction | Drying after 4-hr reaction |
| > 75 | 41.45 | 37.97 | 36.96 | 34.37 | 33.03 | 31.63 | 5.99 | 6.73 | 6.77 | 7.11 |
| 30 ~ 75 | 36.02 | 26.07 | 21.77 | 19.90 | 19.03 | 18.46 | 7.20 | 6.85 | 6.20 | 6.42 |
| 10 ~ 30 | 11.95 | 13.81 | 12.79 | 13.25 | 13.33 | 13.32 | 13.73 | 14.14 | 13.88 | 13.80 |
| 5 ~ 10 | 3.45 | 7.70 | 8.95 | 9.99 | 10.40 | 11.32 | 22.49 | 22.28 | 21.93 | 21.96 |
| < 5 | 7.13 | 14.45 | 19.53 | 22.49 | 24.21 | 25.27 | 50.58 | 50.00 | 51.22 | 50.71 |
| Total | 100.00 | 100.00 | 100.00 | 100.00 | 100.00 | 100.00 | 100.00 | 100.00 | 100.00 | 100.00 |

[Table 14]

| Sample | NSI (% (w/w)) |
|---|---|
| SPC | 5.5017 |
| After mixing / before reaching 60 °C | 7.724 |
| 60 °C 0-hr reaction | 14.199 |
| 60 °C 1-hr reaction | 24.045 |
| 60 °C 2-hr reaction | 29.769 |
| 60 °C 3-hr reaction | 31.911 |
| 60 °C 4-hr reaction | 34.387 |
| 1-hr reaction → Drying | 29.754 |
| 2-hr reaction → Drying | 32.803 |
| 3-hr reaction → Drying | 37.302 |
| 4-hr reaction → Drying | 35.813 |

**Example 5. Measurement of degree of protein degradation using protein hydrolases derived from various species**

**(1) *Bacillus amyloliquefaciens-* or *Bacillus licheniformis-derived* protein hydrolase**

After measuring the water content in the soy protein concentrate, an aqueous mixture was prepared by adding water thereto to adjust the water content at 15 % (w/w) or 25 % (w/w), based on the total weight, respectively. To each experimental group, *Bacillus amyloliquefaciens-derived* protein hydrolase (Alphalase NP, Vision Biochem) or *Bacillus licheniformis-derived* protein hydrolase (FoodPro Alkaline Protease, Vision Biochem) was added in an amount of 0.35 % (w/w), based on the weight of the soy protein concentrate. The soy protein concentrate to which water and the enzyme were added was allowed to undergo an enzymatic reaction at 60 °C for 4 hours. To measure the degree of protein degradation in the experimental group in which the enzymatic reaction was completed, the enzymatic reaction was terminated by heat-treating each group at 100 °C for 20 minutes. The soy protein concentrate of each experimental group was dried and pulverized. The degree of protein degradation in each experimental group and the molecular weight distribution thereof were measured by SDS-PAGE and GPC methods described in Example 1.

As a result, both of the enzymes showed large amounts of low-molecular-weight proteins when hydrolysis was performed at the water content of 15 % (w/w), as compared with the case where hydrolysis was performed at the water content of 25 % (w/w) (FIG. 9 and Table 15). Specifically, in lanes 3 and 5 of the water content of 15 % (w/w), the existing high-molecular-weight protein bands were blurred, whereas low-molecular-weight protein bands became strong. Further, with regard to the hydrolysates of the soy protein concentrate treated with the two enzymes, when *Bacillus amyloliquefaciens-derived* protein hydrolase was used, a composition ratio of the low-molecular-weight proteins of 30 kDa or less was 33.9% and 68.1% at the water content of 25 % (w/w) and 15 % (w/w), respectively, and when *Bacillus licheniformis-derived* protein hydrolase was used, a composition ratio of the low-molecular-weight proteins of 30 kDa or less was 69.1% and 83.6% at the water content of 25 % (w/w) and 15 % (w/w), respectively (Table 15). In other words, it was confirmed that when the soy protein concentrate having the low water content was hydrolyzed, the degree of protein degradation of the soy protein concentrate was greatly increased by using *Bacillus amyloliquefaciens-* or *Bacillus licheniformis*-derived protein hydrolase.

[Table 15]

| MW (kDa ) | *Bacillus amyloliquefaciens* -derived protease | | *Bacillus licheniformis* -derived protease | |
|---|---|---|---|---|
| | Water content of 25% (w/w) | Water content of 15% (w/w) | Water content of 25% (w/w) | Water content of 15 % (w/w) |
| >75 | 22.9 | 8.6 | 6.0 | 4.2 |
| 30~75 | 43.2 | 23.3 | 24.8 | 12.2 |
| 10~30 | 15.6 | 31.7 | 32.9 | 16.4 |

(continued)

| MW (kDa ) | *Bacillus amyloliquefaciens* -derived protease | | *Bacillus licheniformis* -derived protease | |
|---|---|---|---|---|
| | Water content of 25% (w/w) | Water content of 15% (w/w) | Water content of 25% (w/w) | Water content of 15 % (w/w) |
| 5~10 | 5.6 | 16.7 | 15.8 | 26.9 |
| <5 | 12.7 | 19.7 | 20.4 | 40.3 |
| Total | 100.0 | 100.0 | 100.0 | 100.0 |

**(2) *Bacillus subtilis-derived* protease**

After measuring the water content in the soy protein concentrate, an aqueous mixture was prepared by adding water thereto to adjust the water content at 10% (w/w), 15% (w/w), 20% (w/w), 25% (w/w), 30% (w/w), 35% (w/w), and 40% (w/w), based on the total weight, respectively. To each experimental group, *Bacillus subtilis-derived* protein hydrolase (alkaline protease, Benesol) was added in an amount of 0.35% (w/w), based on the weight of the soy protein concentrate. The soy protein concentrate to which water and the enzyme were added was allowed to undergo an enzymatic reaction at 45 °C for 4 hours. Next, to measure the degree of protein degradation in the experimental group in which the enzymatic reaction was completed, the enzymatic reaction was terminated by heat-treating each group at 100 °C for 20 minutes. The soy protein concentrate of each experimental group was dried and pulverized. The molecular weight distribution of proteins in each experimental group was measured by SDS-PAGE and GPC methods described in Example 1.

As a result, when hydrolysis was performed using the enzyme, the amount of low-molecular-weight proteins was increased with decreasing water content. In particular, the large amount of low-molecular-weight proteins was observed at the water content of 20% (w/w) or less, specifically 15% (w/w) or less (Table 16). Further, when the soy protein concentrates having the water content of 10% (w/w) to 20% (w/w) were hydrolyzed, the amounts of the low-molecular-weight proteins of 30 kDa or less were about 64% to about 80%. In other words, it was confirmed that when the soy protein concentrate having the low water content was hydrolyzed, the degree of degradation of the soy protein concentrate was greatly increased even by using *Bacillus subtilis-derived* protein hydrolase (Table 16).

[Table 16]

| MW(kDa) | Water content (% (w/w)) | | | | | | |
|---|---|---|---|---|---|---|---|
| | 40 | 35 | 30 | 25 | 20 | 15 | 10 |
| >75 | 18.1 | 22.7 | 18.6 | 18.2 | 6.7 | 5.2 | 5.1 |
| 30~75 | 36.4 | 39.7 | 42.8 | 44.3 | 28.9 | 17.0 | 15.6 |
| 10~30 | 19.6 | 16.5 | 18.9 | 19.3 | 35.7 | 32.0 | 29.3 |
| 5~10 | 9.8 | 7.3 | 7.2 | 6.8 | 14.1 | 22.0 | 23.4 |
| <5 | 16.1 | 13.8 | 12.4 | 11.4 | 14.6 | 23.9 | 26.6 |
| Total | 100.0 | 100.0 | 100.0 | 100.0 | 100.0 | 100.0 | 100.0 |

The method of the present disclosure may increase the degree of protein degradation and the content of water-soluble proteins in the hydrolysate according to treatment of protein hydrolase by adjusting the water content of the aqueous mixture during hydrolysis of the soy protein concentrate. Accordingly, the present disclosure may provide the hydrolysate of soy protein concentrate which is very useful as a protein source. It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

**1.** A method of preparing a hydrolysate of soy protein concentrate, the method comprising:

incubating an aqueous mixture comprising soy protein concentrate, protein hydrolase, and water, wherein a water content of the aqueous mixture is 5% (w/w) to 60% (w/w).

**2.** The method of claim 1, wherein, in the incubating, the water content of the aqueous mixture is reduced from more than 25% (w/w) and 60% (w/w) or less to 5% (w/w) or more and less than 25% (w/w).

**3.** The method of claim 2, wherein the reduction of the water content is performed by drying.

**4.** The method of claim 1, wherein the incubating is performed under conditions of 50 °C to 100 °C.

**5.** The method of claim 1, wherein the incubating is performed for 0.5 hour to 12 hours.

**6.** The method of claim 1, wherein the protein hydrolase is one or more protein hydrolases selected from the group consisting of *Bacillus licheniformis*-derived protein hydrolase, *Bacillus amyloliquefaciens-derived* protein hydrolase, and *Bacillus subtilis-derived* protein hydrolase.

**7.** The method of claim 1, wherein a concentration of the protein hydrolase is 0.01% (w/w) to 0.50% (w/w), based on the weight of the soy protein concentrate.

**8.** The method of claim 3, wherein the drying is performed by heating.

**9.** The method of claim 8, wherein the heating is performed at 50 °C to 100 °C.

**10.** A hydrolysate of soy protein concentrate prepared by the method of any one of claims 1 to 9.

**11.** The hydrolysate of soy protein concentrate of claim 10, wherein in the hydrolysate of soy protein concentrate, a proportion of proteins having a molecular weight of 30 kDa or less is 30% to 90%, based on the total protein.

**12.** The hydrolysate of soy protein concentrate of claim 10, wherein the hydrolysate of soy protein concentrate has a nitrogen solubility index (NSI) of 5% (w/w) to 40% (w/w).

**13.** A feed composition comprising the hydrolysate of soy protein concentrate of claim 10.

FIG. 1

M
1
2
3
4
5
6
7
8
250kDa
150kDa
100kDa
75kDa
50kDa
37kDa
25kDa
20kDa
15kDa
10kDa

# FIG. 2

M
1
2
3
4
5
250kDa
150kDa
100kDa
75kDa
50kDa
37kDa
25kDa
20kDa
15kDa
10kDa

M
1
2
3
4
5
6
7
8
9
10
11
12
13
14
15
16
17
250kDa
150kDa
100kDa
75kDa
50kDa
37kDa
25kDa
20kDa
15kDa
10kDa

FIG. 3

FIG. 4

M
1
2
3
4
5
250kDa
150kDa
100kDa
75kDa
50kDa
37kDa
25kDa
20kDa
15kDa
10kDa

FIG. 5

M
S
0
1
2
3
4
5
6
7
8
8.5
250kDa
150kDa
100kDa
75kDa
50kDa
37kDa
25kDa
20kDa
15kDa
10kDa

FIG. 6

M
S
0
1
2
3
4
5
6
250kDa
150kDa
100kDa
75kDa
50kDa
37kDa
25kDa
20kDa
15kDa
10kDa

FIG. 7

M
S
0
1
2
3
4
250kDa
150kDa
100kDa
75kDa
50kDa
37kDa
25kDa
20kDa
15kDa
10kDa

FIG. 8

M
1
2
3
4
5
6
7
8
9
10
11
250kDa
150kDa
100kDa
75kDa
50kDa
37kDa
25kDa
20kDa
15kDa
10kDa

FIG. 9

M
1
2
3
4
5
250kDa
150kDa
100kDa
75kDa
50kDa
37kDa
25kDa
20kDa
15kDa
10kDa

FIG. 10

M
1
2
3
4
5
6
7
250kDa
150kDa
100kDa
75kDa
50kDa
37kDa
25kDa
20kDa
15kDa
10kDa

## INTERNATIONAL SEARCH REPORT

International application No.
PCT/KR2019/011427

A. CLASSIFICATION OF SUBJECT MATTER

*A23K 20/147(2016.01)i, A23K 10/30(2016.01)i, A23K 30/20(2016.01)i, A23K 10/14(2016.01)i*

According to International Patent Classification (IPC) or to both national classification and IPC

B. FIELDS SEARCHED

Minimum documentation searched (classification system followed by classification symbols)
A23K 20/147; A23C 19/09; A23J 1/14; A23J 3/30; A23J 3/34; A23K 1/10; C12N 1/20; C12P 1/04; A23K 10/30; A23K 30/20; A23K 10/14

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: soy protein concentrates, protease, incubation

C. DOCUMENTS CONSIDERED TO BE RELEVANT

| Category* | Citation of document, with indication, where appropriate, of the relevant passages | Relevant to claim No. |
|---|---|---|
| X | JP 2011-530274 A (SOLAE LLC. et al.) 22 December 2011<br>See paragraphs [0012]-[0043]. | 1,4-7,10,11 |
| Y | | 2,3,8,9,12,13 |
| Y | KR 10-1517326 B1 (CJ CHEILJEDANG CORPORATION) 04 May 2015<br>See paragraphs [0055], [0125]-[0130]; table 8. | 2,3,8,9,12,13 |
| A | JP 2004-511241 A (DSM NEAMLOZE VENNOTSHAP) 15 April 2004<br>See the entire document. | 1-13 |
| A | JP 2003-511093 A (NORDUR EHF.) 25 March 2003<br>See the entire document. | 1-13 |
| A | KR 10-1408595 B1 (INTERCONTINENTAL GREAT BRANDS LLC.) 17 June 2014<br>See the entire document. | 1-13 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 DECEMBER 2019 (06.12.2019) | **06 DECEMBER 2019 (06.12.2019)** |
| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br>Telephone No. |

Form PCT/ISA/210 (second sheet) (January 2015)

INTERNATIONAL SEARCH REPORT
Information on patent family members

International application No.
PCT/KR2019/011427

| Patent document cited in search report | Publication date | Patent family member | Publication date |
|---|---|---|---|
| JP 2011-530274 A | 22/12/2011 | CA 2726110 A1 | 23/12/2009 |
| | | CN 102387710 A | 21/03/2012 |
| | | EP 2299839 A2 | 30/03/2011 |
| | | KR 10-2011-0020929 A | 03/03/2011 |
| | | US 2011-0097448 A1 | 28/04/2011 |
| | | WO 2009-155557 A2 | 23/12/2009 |
| | | WO 2009-155557 A3 | 04/10/2012 |
| KR 10-1517326 B1 | 04/05/2015 | CN 106795528 A | 31/05/2017 |
| | | EP 3101136 A1 | 07/12/2016 |
| | | EP 3101136 B1 | 19/06/2019 |
| | | JP 2017-506081 A | 02/03/2017 |
| | | JP 6367974 B2 | 08/08/2018 |
| | | US 2017-0020161 A1 | 26/01/2017 |
| | | WO 2015-115790 A1 | 06/08/2015 |
| JP 2004-511241 A | 15/04/2004 | EP 1337157 A2 | 27/08/2003 |
| | | EP 1337157 B1 | 22/02/2006 |
| | | JP 4202748 B2 | 24/12/2008 |
| | | US 2004-0067279 A1 | 08/04/2004 |
| | | US 6875456 B2 | 05/04/2005 |
| | | WO 02-32231 A1 | 25/04/2002 |
| JP 2003-511093 A | 25/03/2003 | CA 2421058 A1 | 26/04/2001 |
| | | CA 2421058 C | 20/04/2010 |
| | | EP 1227736 A1 | 07/08/2002 |
| | | EP 1227736 B1 | 07/01/2004 |
| | | US 7070953 B1 | 04/07/2006 |
| | | WO 01-28353 A2 | 26/04/2001 |
| | | WO 01-28353 A8 | 17/05/2001 |
| KR 10-1408595 B1 | 17/06/2014 | CA 2582711 A1 | 30/09/2007 |
| | | CA 2582711 C | 22/03/2016 |
| | | CN 101066135 A | 07/11/2007 |
| | | CN 101066135 C | 07/11/2007 |
| | | CN 104336619 A | 11/02/2015 |
| | | EP 1839496 A1 | 03/10/2007 |
| | | EP 1839496 B1 | 27/12/2017 |
| | | JP 2007-267737 A | 18/10/2007 |
| | | JP 5193484 B2 | 08/05/2013 |
| | | US 2007-0231450 A1 | 04/10/2007 |
| | | US 7875303 B2 | 25/01/2011 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110136745 A
- US 4376128 A